(19) Europäisches Patentamt
European Patent Office
Office européen des brevets

(11) **EP 4 309 679 A1**

(12) **EUROPEAN PATENT APPLICATION**

(43) Date of publication:
**24.01.2024 Bulletin 2024/04**

(21) Application number: **22198630.0**

(22) Date of filing: **29.09.2022**

(51) International Patent Classification (IPC):
**A61L 2/14** (2006.01)    **C02F 1/46** (2023.01)
**C02F 1/72** (2023.01)    **C02F 103/02** (2006.01)

(52) Cooperative Patent Classification (CPC):
(C-Sets available)
**C02F 1/4608; A01N 59/00; A01P 1/00; A61L 2/14;**
C02F 1/727; C02F 2103/026; C02F 2209/005;
C02F 2209/02; C02F 2209/22; C02F 2209/225;
C02F 2301/08; C02F 2303/04; C02F 2305/023

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.07.2022  US 202263391335 P**

(71) Applicant: **Koninklijke Philips N.V.
5656 AG Eindhoven (NL)**

(72) Inventors:
• **RONDA, Cornelis Reinder
  Eindhoven (NL)**
• **BORN, Matthias
  Eindhoven (NL)**

(74) Representative: **Philips Intellectual Property &
Standards
High Tech Campus 52
5656 AG Eindhoven (NL)**

(54) **WATER PLASMA ACTIVATION**

(57)    A device for generating plasma-activated water (PAW) and which includes means for conditioning an atmosphere inside a water receiving space to increase a concentration of one or more gasses such as oxygen and/or nitrogen to increase concentration of reactive species of the one or more gasses in the PAW generated by the device.

FIG. 1

(52) Cooperative Patent Classification (CPC): (Cont.)

C-Sets
**A01N 59/00, A01N 25/02**

**Description**

FIELD OF THE INVENTION

This invention relates to a device and method for generating plasma activated water.

BACKGROUND OF THE INVENTION

Plasma activated water (PAW) has been shown to have potent anti-microbial activities. PAW has multiple potential application areas. One is in the oral healthcare space, where PAW could be used for plaque reduction purposes through anti-microbial action on plaque bacteria. For example, it could be used as an alternative or supplement to traditional mouthwash. It could be integrated in oral irrigators or toothbrushes. Another area where PAW might be applied is in skin sanitization, for example for odor reduction in armpits, or for wound treatment.

One notable advantage of plasma-activated water is that the anti-microbial effect is achieved without a need for chemicals to be added to water. This contributes to sustainability (e.g. no chemical waste, no transport, no containers or bags).

SUMMARY OF THE INVENTION

The invention is defined by the claims.

An aspect of this invention is a Plasma Activated Water (PAW) generating device. The device comprises: an oxygenator for increasing an oxygen concentration of a gaseous environment; a water plasma-activation means; and a water receiving space. The oxygenator is arranged for increasing an oxygen concentration of an atmosphere in the water receiving space, for thereby in use increasing an oxygen-concentration of water received in the water-receiving space. Furthermore, the plasma-activation means is arranged for plasma-activating water received within said water-receiving space which is exposed to said atmosphere in the water-receiving space.

The amount of reactive oxygen species that can be generated in water depends on the total amount of $O_2$ that is dissolved in water. This amount, in turn, depends on the partial oxygen pressure in the atmosphere within which the water is situated. The $O_2$ content in air is only 20%.

It is thus proposed by the inventors to add to a plasma activated water (PAW) generator an atmosphere conditioning system for conditioning an atmosphere in the water receiving space, wherein the atmosphere conditioning system includes at least an oxygenator (such as an oxygen concentrator). Using the oxygenator, the atmosphere of a chamber holding the water can be increased. In this way, a concentration of reactive oxygen species in the water output by the plasma-activation means can be increased.

For example, it is possible using current technology to increase the oxygen concentration of gas to (almost) 100%. In this way, the concentration of reactive oxygen species in the plasma activated water can be increased by a factor of 5. The concentration of reactive species in the water correlates with efficacy in deactivating pathogens. This improves efficacy of the water for example for hygiene applications.

Advantageously, in the proposed concept, the water receiving space acts as both an oxygen conditioning chamber for the water and a plasma-activation chamber. This adds structural and functional efficiency.

In some embodiments, there might further be added a means for increasing a concentration in the atmosphere of the water receiving space of one or more other gasses. For example, nitrogen reactive species are also effective species in plasma activated water. Thus there may further be provided means for increasing a concentration in the atmosphere of the water receiving space of nitrogen. Indeed, this could even be provided instead of an oxygenator in some embodiments, since increasing nitrogen concentration will achieve a beneficial effect by its own. As a more general principle therefore, one could provide as part of the device an atmosphere conditioning system for conditioning an atmosphere in the water receiving space configured for increasing a concentration in an atmosphere of the water-receiving space of one or more gas components. For example, the atmosphere conditioning system may include means for increasing a concentration in the atmosphere of the water receiving space of one or both of oxygen and nitrogen.

In some embodiments, the oxygenator comprises an oxygen concentrator. As an alternative, the oxygenator could simply comprise a high-concentration oxygen source, e.g. from a bottle, which is pumped into the water-receiving space.

In some embodiments, the water-receiving space may be a water-receiving chamber.

A flow control means may be provided. In operation, a flow control means might partially fill the water receiving chamber with a water source via an inlet, thereby leaving a water-free space above the water level, and wherein said water-free space provides the atmosphere of the chamber whose oxygen concentration is controlled. A controller might be provided arranged to control the flow control means.

In some embodiments, the water-receiving chamber may be configured to be atmospherically sealed during operation of the oxygenator for adjusting the oxygen concentration in the atmosphere of the water-receiving space.

In some embodiments, the device may further comprise a temperature conditioning means, for reducing a temperature in the water-receiving space, for thereby in use reducing a temperature of water received in the water receiving space. It may be arranged for reducing a temperature of the atmosphere in the water receiving space. It may be arranged for directly cooling the water received in the water receiving space. The solubility of both oxygen and nitrogen in water increases as temperature of the water decreases. Thus, by lowering the temperature of the atmosphere, more oxygen and nitrogen can be absorbed in the water and thus, upon plasma-activation, more reactive species of the elements can be achieved in the water.

Even if the water increases in temperature again after plasma-activation, since the solubility of the reactive species (e.g. $O_3$) is higher than that of $O_2$ regardless of temperature, the ultimate result is a greater concentration of the reactive species in the plasma-activated water than if the water has not been chilled before plasma activation. For even greater retained benefit, the PAW could be chilled until use, or could be used immediately.

In some embodiments, the device further comprises a controller operatively coupled to one or more components of the device for controlling operation.

In some embodiments, the device further comprises a controller operatively coupled to the oxygenator and adapted to control the oxygenator to adjust the oxygen concentration of the atmosphere in the water-receiving space to be at or above pre-defined minimum level. Thus, this allows for specific control of the concentration of specified gasses in the water receiving space. An oxygen concentration sensor might be provided arranged to sense an oxygen concentration in the water receiving space, and operatively coupled with the controller. An alternative would be to simply activate an oxygenator or other atmosphere conditioning component for a set time period, rather than controlling it based on sensor feedback.

In some embodiments, the device comprises a controller operatively coupled to the plasma-activation mean. The controller may be adapted to trigger the plasma-activation means to start plasma-activation of the water only after the atmosphere in the water-receiving space is at or above the aforementioned pre-defined minimum level.

In some embodiments, the device comprises a controller, and wherein the controller is adapted to control operation of a water treatment cycle.

The water treatment cycle may include partially filling the water receiving space with a source of water to be treated, for example by control of a flow control means at an inlet of the water-receiving space. By partially filling, this ensures that there is a water-free space above the water level, and this water free space provides the atmosphere whose oxygen concentration can be changed using the oxygenator.

The water treatment cycle may include controlling the oxygenator to increase an oxygen concentration of an atmosphere of the water-receiving space above the water level of the partially filled space.

The water treatment cycle may include controlling the plasma-activation means to perform plasma-activation of the water in the water receiving space.

The water treatment cycle may include evacuating the chamber via an outlet after plasma-activation, for example by control of a flow control means at the outlet.

The flow control means could be facilitated by one or more controllable valves for example.

In some embodiments, the device may further comprise a water demineralization means, and wherein the plasma-activation means is arranged for plasma-activating water which has been demineralized by the water demineralization means. The water demineralization means may comprise a water distillation means for example, or a reverse osmosis demineralizer.

The invention can also be embodied in the form of a method.

Thus, in accordance with one or more embodiments, there is provided a method for plasma-activation of water. The method comprises receiving a source of water to be treated into a water receiving space; conditioning an atmosphere in the water-receiving space with an oxygenator; and plasma-activating the water received in the water receiving space which is exposed to the atmosphere conditioned by the oxygenator.

In some embodiments, the method further comprises cooling the water received in the water receiving space prior to the plasma-activation.

In some embodiments, the water-receiving space is atmospherically sealed during the conditioning of the atmosphere and the plasma activation.

In some embodiments, the source of water to be treated is tap water.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows a block diagram schematically illustrating components of an example device in accordance with one or more embodiments of the invention;

Fig. 2 shows a block diagram of steps of an example method in accordance with one or more embodiments of the invention;

Fig. 3 shows in cross-section a schematic illustration of an example device which is in accordance with one or more embodiments of the invention;

Fig. 4 is a graph showing a relationship between oxygen solubility in water and temperature;

Fig. 5 is a graph showing a relationship between solubility in water of a plurality of different gaseous species and temperature; and

Fig. 6 shows a block diagram schematically illustrating components of an example device having temperature conditioning means, and which is in accordance with one or more embodiments of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a device for generating plasma-activated water and which includes means for conditioning an atmosphere inside a water receiving space to increase a concentration of one or more gasses such as oxygen and/or nitrogen to increase concentration of reactive species of the one or more gasses in the plasma-activated water generated by the device.

The basic principles behind generation of Plasma-Activated Water will now be outlined.

A general introduction to the concepts of Plasma Activated Water can be found in the paper: Soni, A et al, "Plasma-Activated Water (PAW) as a Disinfection Technology for Bacterial Inactivation with a Focus on Fruit and Vegetables".

As described in this paper, PAW generation employs use of so-called cold atmospheric pressure plasma (CAPP), or non-thermal plasma. Plasma consists of partially ionized gas, generated for example by applying a high level of energy to the gas, typically using one or more energized electrodes. It is composed of a wide variety of reactive species including excited atoms and molecules, positive and negative ions, free electrons, and irradiation. These species are highly reactive antimicrobial agents. Surfaces or substances to be decontaminated can be directly exposed to plasma discharges. Alternatively, plasma-activated water (PAW) effectively acts as a intermediary carrier for plasma-generated reactive species. Ordinary water can be exposed to a plasma discharge to 'plasma-activate' it, following which the water can be applied to surfaces or substances to be decontaminated.

PAW can be generated either by discharging plasma over the water surface, or by applying/injecting a plasma discharge directly within the body of water.

Options for the plasma source include for example gliding arc discharge, corona discharge, plasma streamer bubble, and dielectric barrier discharge. Dielectric barrier discharge is perhaps the most common. In this approach, an insulating dielectric barrier separates two electrodes where the plasma is generated. A plasma jet is one variety of dielectric barrier discharge, and this uses a central needle electrode and one outer annular electrode and includes an additional gas flow which transports the plasma to the liquid source.

Further reference is made to the paper: Mai-Prochnow, A et al, "Interactions of plasma-activated water with biofilms: inactivation, dispersal effects and mechanisms of action."

As described in this paper, specifically in the section "How to generate PAW and regulate the aqueous RONS", Plasma-Activation of water can be achieved through any of three main techniques. All involve discharge of cold atmospheric plasma (CAPP) to the water. A first technique is discharge of gas-phase plasma over the surface of the liquid to be activated. A second is use of multiphase plasma discharges, in which plasma is ignited in bubbles or ignited in a gaseous phase, but mixed with water droplets. A third is direct plasma discharge or injection in the liquid to be activated.

Any of these techniques could be applied in the context of the present invention. Perhaps the simplest approach would be the first technique of discharge of gas-phase plasma over the liquid to be activated. In the context of the present invention, this could be achieved by discharging plasma over the surface of the water received in the water receiving space which has been exposed to the actively oxygenated atmosphere.

The reader is further referred to the sections "Discharge over the Water Surface" (starting page 2), "Multiphase Discharges" (starting page 3), "Direct Plasma Discharge in Aqueous Solution" (on page 4) of the above-referenced paper authored by Mai-Prochnow, A et al, for further details on implementing each of the three techniques.

Thus, in summary, plasma activated water is obtained by generating a plasma in or on water. The treatment results in very reactive species including, among others, $NO_2$, $NO_3$ and $O_3$.

These species can play a role in improving hygiene, such as in the mouth or on the skin. Plasma activated water can also be used for disinfection purposes more generally.

Oxygen, dissolved in water, is one of the precursor molecules to the reactive species. Plasma activation of water leads to reactive oxygen species. The concentration of these species is determined by the amount of $O_2$ dissolved in the water.

It has been a realization of the inventors that the concentration of the reactive species in the plasma-activated water could be increased by increasing a concentration of oxygen in the space in which the plasma activation of the water is performed, so that more oxygen dissolves in the water in advance of the plasma-activation, and thus the concentration of activated reactive species of oxygen in the water after plasma-activation is increased.

Water solubility of oxygen at 25°C and atmospheric pressure (= 1 bar) is approximately 40 mg/L water. In air with a normal composition, the oxygen partial pressure is 0.2 atm. This results in dissolution of 8 mg $O_2$/L in water.

As a consequence, in the context of plasma activation, the maximum amount of, e.g. $O_3$, that can be obtained in water in contact with air in a reasonable time (neglecting diffusion of $O_2$ into the water during activation itself because $O_2$ is being consumed during activation) also is 8 mg/L. This corresponds to 8/48 (48 = Molecular weight $O_3$) * $10^{-3}$ = $1.7 * 10^{-4}$ mole/L water.

By increasing the oxygen concentration of air which is offered to the water, this amount can be increased. By way of an illustrative calculation, by offering air with almost 100% $O_2$ (by using an oxygenator such as an oxygen concentrator), this amount could be increased to up to $8.5 * 10^{-4}$ mole/L water.

Thus, the proposal of the inventors is to use an oxygenator to increase the concentration of $O_2$ in the air inside the device that generates plasma activated water. By doing so, the concentration of reactive species that contain oxygen can be increased up to a factor of 5, as demonstrated by the above calculation.

Embodiments of the invention thereby increase the disinfection or hygiene efficacy of generated plasma activated water by increasing the amount of reactive oxygen species in plasma activated water.

Of course, similar principles apply also for other gasses such as nitrogen, which also give rise to reactive species in water upon plasma activation.

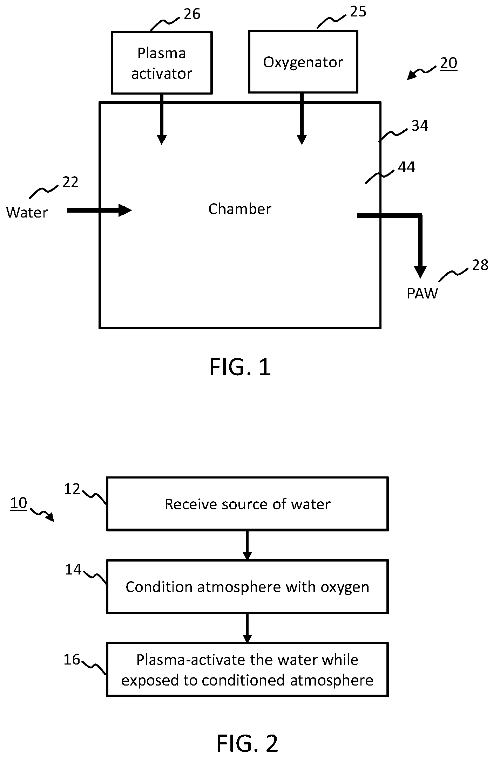

Fig. 1 outlines in block diagram form components of an example device according to one or more embodiments of the invention. The components will be recited in summary, before being explained further in the form of a more particular example embodiment.

Provided is a Plasma Activated Water (PAW) generating device 20. The device comprises an atmosphere conditioning system for conditioning an atmosphere of a gaseous environment. For example the atmosphere conditioning system is adapted to increase a concentration of one or more gas components in the gas environment. The atmosphere conditioning system in the illustrated example includes at least an oxygenator 25 configured for increasing an oxygen concentration of a gaseous environment. The device further comprises a water plasma-activation means 26. There is further provided a water receiving space 44.

The oxygenator 25 is arranged for increasing an oxygen concentration of an atmosphere in the water receiving space 44, for thereby in use increasing an oxygen-concentration of water received in the water-receiving space.

The plasma-activation means 26 is arranged for plasma-activating water received within said water-receiving space 44 which is exposed to said atmosphere in the water-receiving space.

In the example illustrated in Fig. 1, the device comprises a water-receiving chamber 34, and an interior of the chamber forms the water receiving space 44.

The plasma activation means and oxygenator are arranged operatively coupled with the water receiving space 44.

It is preferable that the water receiving space be atmospherically sealed (e.g. hermetically sealed) during operation of the oxygenator for adjusting the oxygen concentration in the atmosphere of the water-receiving space.

As indicated schematically in Fig. 1, in operation, water 22 is received into the water receiving space 44, whereupon the oxygenator 25 conditions the atmosphere inside the chamber by increasing an oxygen concentration inside the chamber.

Optionally, a pause period may then occur, to allow the water in the space 44 to absorb oxygen from the oxygenated atmosphere.

Then, the plasma activation means is controlled to perform a plasma activation of the water in the chamber, for example by discharge of cold atmospheric plasma (CAPP) to the water, in accordance with the principles already discussed above.

The plasma activated water 28 may then be ejected from the water receiving space 44 for collection in a suitable collection container for example.

The inventive concepts can also be embodied in the form of a method. By way of illustration, Fig. 2 outlines steps of an example method in accordance with one or more embodiments of the invention.

The method 10 comprises receiving 12 a source of water to be treated into a water receiving space. The method further comprises conditioning 14 an atmosphere in the water-receiving space with an oxygenator. The method further comprises plasma-activating 16 the water received in the water receiving space which is exposed to the atmosphere conditioned by the oxygenator.

The method could in some embodiments be implemented by a computer, e.g. a processor of a controller device, which is arranged for controlling operation of the various components of the plasma-activated water generator device 20.

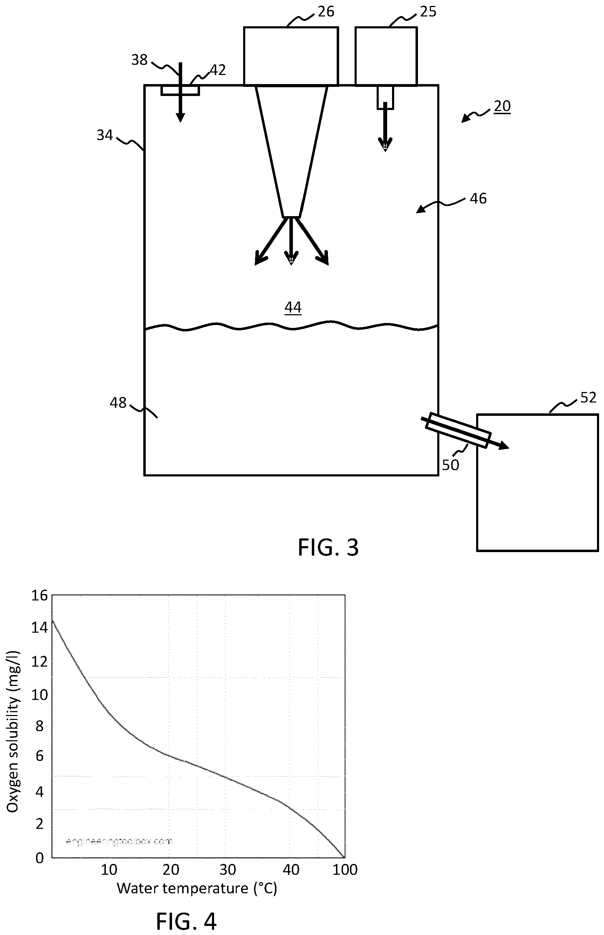

FIG. 3 shows a schematic diagram of an example PAW generating device which is in accordance with one or more embodiments of the invention. It will be appreciated that not all features of this particular example are essential to the inventive concept, and are described to aid understanding and to provide an example to illustrate the inventive concepts.

The device is shown schematically in cross-section.

The device 20 comprises a water-receiving chamber 34, which provides said water receiving space 44. The chamber comprises a fluid inlet 42 for receiving an input water source 38. In operation, the chamber receives water via this inlet and retains it in the water-receiving space as a body of water-to-be-treated 48. By way of example, the input water could be tap water. The inlet 42 indeed could be a main water connection point, for directly receiving a mains tap water supply.

The device further comprises a water plasma-activation means 26. This is arranged in the illustrated example with ejection means for discharging a source of plasma over the water-to-be-treated 48. In other examples however, the plasma could be discharged directly into the body of water-to-be-treated 48.

The device further comprises an atmosphere conditioning system which includes at least an oxygenator 25. The oxygenator 25 is arranged for increasing an oxygen concentration of an atmosphere 46 in the water receiving space 44. In operation, the water receiving space is partially filled with water-to-be-treated 48 so that there is a water-free space/region above the level of the water line of the received water 48. This water-free space provides a gaseous atmosphere 46 inside the water receiving space 44, and the atmosphere conditioning system, including the oxygenator 25, is arranged for conditioning the atmosphere 46 in this water free space or region.

In operation, once a body of water to be treated 48 has been received inside the chamber 34, the chamber might be atmospherically sealed, so that conditioning of the atmosphere 46 inside can be done more efficiently. In this way, there is no exchange of air during operation, and thus the water 48 received in the water-receiving space 44 can be saturated with oxygen. The resulting oxygen concentration of the water corresponds for example to the partial pressure of $O_2$ in the oxygen enriched atmosphere.

The oxygenator 25 is activated and performs oxygenation of the atmosphere 46 inside the water-receiving space 44. This might be done for example by cycling gas from the atmosphere 46 through an oxygen concentrator which increases the oxygen concentration. This process might continue for a pre-defined time period, or until an oxygen concentration of the atmosphere in the water-receiving space is at or above pre-defined minimum level. An oxygen concentration sensor might be provided (not shown in Fig. 3) arranged to sense oxygen concentration in the atmosphere 46 in the water receiving space 44, and a controller might be provided operatively coupled to the oxygenator 25 and adapted to control the oxygenator to adjust the oxygen concentration of the atmosphere in the water-receiving space to be at or above a pre-defined minimum level. Optionally, the controller might be adapted to trigger the plasma-activation means to start plasma-activation of the water only after the atmosphere 46 in the water-receiving space 44 is at or above said pre-defined minimum level.

Additionally, in some embodiments, a controller might be adapted to control the oxygenator such as to achieve an oxygen concentration in the atmosphere 46 in the water receiving space 44 which is within pre-defined upper and lower bounds, i.e. kept within a pre-defined range. In this way, the concentration of reactive oxygen species can be fine-tuned, e.g. to enable application-specific concentrations. For example, in some applications, it may be desired to prevent overly aggressive action of the plasma activated water. Following the oxygenation phase, the plasma-activation means 26 is triggered, and plasma-activation of the water 48 inside the now oxygenated water-receiving space 44 is performed.

As noted above, there are multiple techniques known in the art for generating the plasma for use in plasma-activating water. One approach would be to discharge gas-phase plasma over the water-to-be-treated 48. Techniques for generating the plasma discharge have already been discussed above, and will not be repeated here for brevity. Typically, a strong electrical field is created using two electrodes, for example a high frequency alternating field, and this converts gas into a plasma phase.

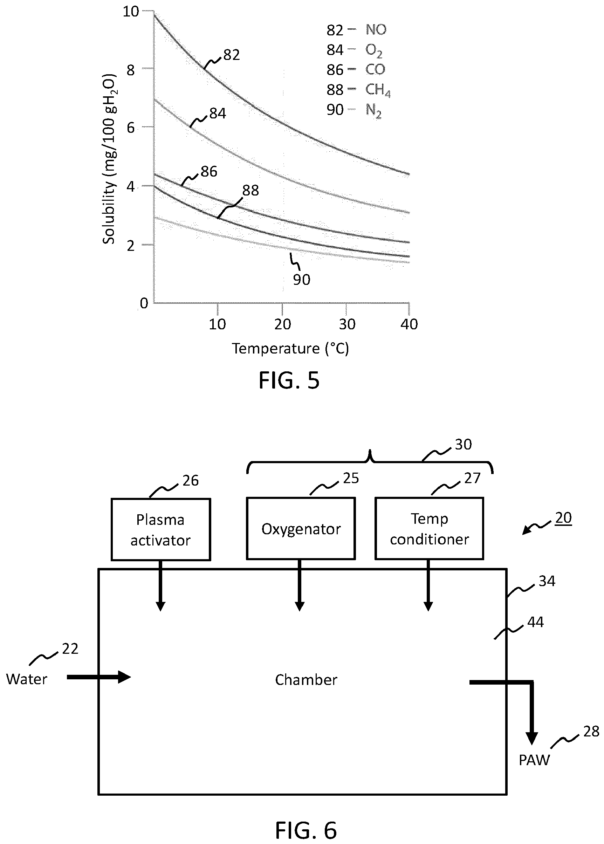

Although the oxygenation and plasma-activation have been described as two separate, sequentially performed phases, in some embodiments, these phases could overlap. For example, plasma-activation might start simultaneously with activation of the oxygenator, to maximize plasma-activation time. This (quasi) continuous plasma activation might incdeed increase the overall concentration of reactive species in the plasma-actiavted water, as the reactive species are more soluble in water than $O_2$ and $N_2$ as they are more polar. This is e.g. visible in Fig. 5: the solubility of the more polar NO in water is higher than that of $N_2$ and $O_2$.

In some embodiments, oxygenation might take place without plasma-activation for an initial period before the plasma-activation is triggered (e.g. a set time period or until a set minimum oxygen concentration in the atmosphere 46 is reached), following which plasma-activation is started, and wherein the oxygenator is controlled to continue oxygenating the atmosphere 46 throughout the whole or part of the plasma-activation operation. This ensures an initial higher level of oxygen before plasma-activation starts, while also maximizing the oxygenation over the whole treatment cycle.

Finally, the plasma-activated water (PAW) is evacuated from the water receiving space 44 into a collection chamber 52 which is fluidly connected to the water receiving space via a collector outlet 50. For example there may be flow control means at the outlet which can be controlled to open or close the outlet. The user can then take the PAW from the collection chamber 52 for use. In a preferred design, and as illustrated in Fig. 3, the collection chamber 52 is arranged so that its inlet is gravitationally lower than the outlet of the water receiving chamber 34, so that the condensed, plasma-activated water can drain by gravitational flow into the collection chamber 52. However, this is not essential and alternatively, the evacuation of the plasma-activated water could be achieved through use of one or more pumps.

A controller of the device (not shown), may be adapted to control the overall operation of the water treatment cycle. For example, a water treatment cycle might comprise the following stages:

- partially filling the water receiving space 44 with a source of water 48 to be treated, for example by control of a flow control means at an inlet 42 of the water-receiving space;
- controlling the oxygenator 25 to increase an oxygen concentration of an atmosphere 46 of the water-receiving space 44 above the water level of the partially filled space;
- controlling (after or during the oxygenation) the plasma-activation means 26 to perform plasma-activation of the water 48 in the water receiving space 44; and
- evacuating the chamber via an outlet 50 after plasma-activation, for example by control of a flow control means at the outlet. The flow control means could be facilitated by valves for example.

With regards to the oxygenator, a simple way to create an $O_2$-rich atmosphere is by using an oxygen concentrator. Oxygen concentrators work by selectively removing certain components of air (such as carbon dioxide or nitrogen) to thereby increase the relative concentration of oxygen.

These concentrators are able to significantly increase the O2 concentration in air, up to 96%. The oxygen concentrator may contain a motor that can displace air and, in this way, the atmosphere in the plasma activated water generator is enriched with $O_2$. State of the art oxygen concentrators (typically focused on the medical field) are able to provide an oxygen enrichment at a flow rate of up to 6L of oxygen per minute. For the purposes of the present invention, such high flow rates may not be needed. For typical domestic use for example, an output rate of e.g. 0.5-1 L within a time span of 3-5 minutes might be sufficient. As another (technologically simpler) alternative, the oxygenator might utilize a connected source of pure or high-concentration oxygen and mix this oxygen into the atmosphere 46 of the water-receiving space 44. For example, the oxygenator might be adapted for connection with a replaceable bottle or tank of oxygen. The oxygenator might cycle the atmosphere 46 in the chamber 34 with the oxygen source, to increase the oxygen concentration.

By increasing the oxygen concentration in the atmosphere before plasma activation of the water, the resulting concentration of reactive oxygen species (ROS) in the plasma-activated water generated by the device is significantly increased.

It is noted that, in addition to oxygen, also nitrogen in the atmosphere to which water is exposed during plasma activation will be absorbed by the water and plasma-activated, leading to reactive nitrogen species (RNS) in the plasma-activated water. It is further noted that, since most of air is nitrogen, it is to be expected that an oxygenator will increase oxygen concentration of the atmosphere at the cost of nitrogen concentration. However, this notwithstanding, the end result is still a body of plasma-activated water with a greater aggregate concentration of reactive species (oxygen + nitrogen) than if no atmospheric treatment had been performed. This is because oxygen solubility in water is higher than that of nitrogen (see Fig. 5). This means that increasing the ratio of oxygen:nitrogen in the atmosphere will have a net effect of increasing the overall aggregate concentration of oxygen+nitrogen in the water, meaning that, when plasma-activated, the overall aggregate concentration of reactive oxygen species (ROS) and reactive nitrogen species (RNS) is increased in the plasma-activated water exposed to an oxygenated atmosphere compared to being exposed to normal air. Furthermore, even this notwithstanding, ROS (such as $O_3$) have greater anti-microbial efficacy in general than RNS because, for instance, oxidation potential particularly of $O_3$ is very high.

A potential extension to any embodiment of this invention would be to add a further stage to the water treatment cycle in which a first phase of plasma activation is performed before oxygenating the atmosphere, i.e. while nitrogen concentration is still high. This would result in plasma activation with maximum potential to generate reactive nitrogen species (RNS) in the water. Following this, the oxygenation of the atmosphere could be performed, followed by another phase of plasma-activation of the water, to thereby achieve the high concentration of reactive oxygen species (ROS) in the water. It is noted that the oxygenation of the atmosphere after the first phase of plasma-activation would not be expected to significantly diminish the RNS concentration already generated in the water because the water solubility of RNS (and indeed ROS) is higher than that of either $O_2$ or $N_2$ as the ROS and RNS are more polar. Therefore, the increased $O_2$ concentration would not significantly displace the already generated RNS in the water.

In some embodiments, in addition to conditioning the gas content of the atmosphere 46 in the water receiving space 44, also means may be provided for adjusting a temperature of water received in the water-receiving space 44. In particular, water at a lower temperature can absorb more oxygen. The temperature of the atmosphere 46 inside the water receiving space 44 could be reduced to reduce the temperature of the received water-to-be-treated 48.

To explain further, with reference to Fig. 4, on lowering the temperature of a water source, the oxygen solubility of the water increases. Fig. 4 shows a sample relationship between oxygen solubility of water (y-axis; units: mg/L) and water temperature (x-axis; units: degrees Celsius), for a partial oxygen pressure of 20%.

The amount of $O_2$ in a body of water (mg/100g $H_2O$) (with partial pressure 100% (added by CR)) which has a water temperature T between 0 °C and 25 °C, is approximately given by:

$$O_2 \text{ in water (mg/100 g of } H_2O) = 8 + 0.26*(25\text{-}T)$$

Thus, the lower the temperature (without freezing the water), the higher the oxygen concentration, and thus the higher the concentration of reactive oxygen species created in the water upon plasma activation.

In addition to reactive oxygen species, also reactive $N_2$ species have a beneficial antimicrobial effect. Lowering the temperature also increases the water solubility of nitrogen. In particular, on cooling, the amount of $N_2$ in water can be increased, up to approximately 50% if water is cooled to 0°C.

In additional to nitrogen, the solubility of other air components which elicit reactive species upon plasma exposure is also increased. Fig. 5 shows a graph illustrating solubility of different gasses (y axis; units: mg / 100g$H_2$) as a function of temperature (x-axis; units: degrees Celsius), at 100% partial pressure.

Line 82 corresponds to NO. Line 84 corresponds to $O_2$. Line 86 corresponds to CO. Line 88 corresponds to CH4. Line 90 corresponds to $N_2$.

Inspection of especially Fig. 5 shows that the highest amount of $O_2$ that can be dissolved in $H_2O$ is approximately 70 mg/l. This corresponds to 148 mg of $H_2O_2$ in water (one dissolved $O_2$ molecule enables generation of two molecules of $H_2O_2$). This corresponds to a percentage of 0.015%.

It is noted that for Fig. 5, the shown relationship is for 100% partial pressures. However, for present purposes the absolute concentrations are not important; the graph demonstrates the principle that relative solubility increases for the listed gas components as a function of decreasing temperature.

The above principle can be implemented to further increase concentration of reactive species in the PAW in accordance with some embodiments of this invention.

Fig. 6 is a schematic depiction of an example PAW generating device in accordance with one or more embodiments which incorporates functionality for reducing a temperature of water-to-be-treated received in the water receiving space.

The device can be implemented in all respects in the same way as any of the devices already described, for example those described with reference to Fig. 1 and Fig. 3, except for the additional inclusion of a temperature conditioning means 27, for reducing a temperature of the atmosphere in the water-receiving space 44, for thereby in use reducing a temperature of water received in the water receiving space. By way of example, the temperature conditioning device 27 and oxygenator can be understood as component parts of an atmosphere conditioning system 30 arranged for conditioning the atmosphere of a gaseous environment in the water receiving space.

By way of example, cooling could be achieved through use of a refrigeration system. This could be an air-conditioner type refrigeration system which uses a condenser to cool coils over which air from inside the chamber is cycled to cool the air. It could be a solid state refrigeration system (similar to a fridge) in which cooling coils are used to cool one or more interior surfaces of the chamber 34 to thereby cool the water and/or the atmosphere inside the water receiving space. Peltier cooling is another simpler option. An even simpler example would be provision of a temperature conditioning means in the form of an ice-retaining receptacle constructed relative to the chamber such that ice received in the receptacle is thermally coupled with walls of the chamber 34 and/or the water receiving space 44 inside the chamber. For instance the ice receptacle could be a channel running around part or all of the outside of the chamber. This could be filled via an ice input area at a top of the device for example. It might include a fluid drain to allow drainage of meltwater after the ice has melted. Of course, this is just an example to illustrate the different options which would be possible.

As a further optional feature, compatible with any embodiment of the invention, there may further be provided a water demineralization means, and wherein the plasma-activation means is arranged for plasma-activating water which has been demineralized by the water demineralization means. The oxygen solubility in demineralized water is greater than in, for example, tap water. In some embodiments, a water demineralization means might be provided adapted to demineralize the water (for example by distillation) in advance of the plasma activation. The demineralization could be done before, during or after the oxygenation. For instance, in one set of embodiments, the oxygenator might be arranged to oxygenate the atmosphere in a distillation chamber in which water is evaporated and condensed, and wherein plasma activation is performed by discharging plasma over the water condensate. In this way, a common chamber is used for water demineralization, oxygenation and plasma activation, which adds great structural and functional efficiency. This represents just one example. For instance, the demineralization means could in further embodiments be performed through reverse osmosis instead of distillation.

Using embodiments of the present invention, in a relatively short time, a highly potent dose of PAW can be created. The size of the device 20 could be adapted depending upon the desired volumes of PAW to be generated per unit time. For certain personal care applications, volumes needed in a single generation session may be fairly small. For example, a typical mouthwash/deodorant volume for one time use is in the order of 20 ml. In this case, the device could be quite small. For example, it could have a size similar to a large deodorant can, for example approximately 30-100 mm in diameter, for example 30-60 mm in diameter, and approximately 200-250 mm high.

For other functional uses, such as for use as a fluid in an oral irrigator, where the volumes needed are much larger (e.g. 500 ml), the unit may need to be bigger, and/or the process time may be longer. For example, the PAW generation device may need to be started some time before intended use of the irrigator (e.g. 15 min). By way of example, the size of the device may have a size greater than 150 mm x 200 mm 250 mm, which is the size of a typical oral irrigator for example.

There are a wide variety of potential applications for PAW, including for decontaminating surfaces, and for personal hygiene purposes, e.g. oral hygiene. For instance, PAW could be used as a replacement or supplement to mouthwash. Wound treatment is another potential application. Another application is the use of plasma-activated water for disinfection of baby accessories, such as baby soothers.

A processor can be implemented in numerous ways, with software and/or hardware, to perform the various functions required. A processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A Plasma Activated Water (PAW) generating device (20) comprising:

    an oxygenator (25) for increasing an oxygen concentration of a gaseous environment;
    a water plasma-activation means (26);
    a water receiving space (44);
    wherein the oxygenator (25) is arranged for increasing an oxygen concentration of an atmosphere (46) in the water receiving space (44), for thereby in use increasing an oxygen-concentration of water received in the water-receiving space;
    wherein the plasma-activation means is arranged for plasma-activating water (48) received within said water-receiving space which is exposed to said atmosphere in the water-receiving space.

2.  The device of claim 1, wherein the oxygenator (25) comprises an oxygen concentrator.

3.  The device of claim 1 or 2, wherein the water-receiving space (44) is a water-receiving chamber (34).

4.  The device of claim 3, wherein the water-receiving chamber (34) is atmospherically sealed during operation of the oxygenator (25) for adjusting the oxygen concentration in the atmosphere (46) of the water-receiving space (44).

5.  The device of any of claims 1-4, further comprising a temperature conditioning means (27), for reducing a temperature in the water-receiving space (44), for thereby in use reducing a temperature of water received in the water receiving space.

6.  The device of any of claims 1-5, further comprising a controller operatively coupled to the oxygenator (25) and adapted to control the oxygenator to adjust the oxygen concentration of the atmosphere in the water-receiving space to be at or above pre-defined minimum level.

7.  The device of claim 6, wherein the controller is further operatively coupled to the plasma-activation means (26), and wherein the controller is adapted to trigger the plasma-activation means to start plasma-activation of the water only after the atmosphere in the water-receiving space (44) is at or above said pre-defined minimum level.

8.  The device of any of claims 1-7, wherein the device comprises a controller, and wherein the controller is adapted to control operation of a water treatment cycle comprising:

    partially filling the water receiving space with a source of water to be treated, for example by control of a flow control means at an inlet of the water-receiving space;
    controlling the oxygenator to increase an oxygen concentration of an atmosphere of the water-receiving space above the water level of the partially filled space;
    controlling the plasma-activation means to perform plasma-activation of the water in the water receiving space; and
    evacuating the chamber via an outlet after plasma-activation, for example by control of a flow control means at the outlet.

9.  The device of any of claims 1-8, further comprising a water demineralization means, and wherein the plasma-activation means is arranged for plasma-activating water which has been demineralized by the water demineralization means.

10. A method (10) for plasma-activation of water, comprising:

    receiving (12) a source of water to be treated into a water receiving space;
    conditioning (14) an atmosphere in the water-receiving space with an oxygenator;
    plasma-activating (16) the water received in the water receiving space which is exposed to the atmosphere conditioned by the oxygenator.

11. The method of claim 10, wherein the method further comprises cooling the water received in the water receiving space prior to the plasma-activation.

12. The method of claim 10 or 11, wherein the water-receiving space is atmospherically sealed during the conditioning of the atmosphere and the plasma activation.

13. The method of any of claims 10-12, wherein the source of water to be treated is tap water.

26

Plasma
activator

25

Oxygenator

20

34

22

Water

Chamber

44

PAW

28

## FIG. 1

10

12

Receive source of water

14

Condition atmosphere with oxygen

16

Plasma-activate the water while
exposed to conditioned atmosphere

## FIG. 2

FIG. 3

FIG. 4

**FIG. 5**

82 — NO
84 — O$_2$
86 — CO
88 — CH$_4$
90 — N$_2$

**FIG. 6**

Europäisches
Patentamt

European
Patent Office

Office européen
des brevets

# EUROPEAN SEARCH REPORT

Application Number

EP 22 19 8630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 645 940 B1 (DING YUTING [CN] ET AL) 12 May 2020 (2020-05-12) * figure 1 * * column 7, line 31 – column 8, line 34 * ----- | 1-13 | INV. A61L2/14 C02F1/46 ADD. C02F1/72 C02F103/02 |
| X | KR 2015 0030803 A (UNIV SUNCHON NAT IND ACAD COOP [KR]) 23 March 2015 (2015-03-23) * figure 1 * * paragraph [0021] – paragraph [0055] * ----- | 1-13 | |
| A | KR 2004 0064411 A (KIM IN GIL) 19 July 2004 (2004-07-19) * figure 1 * ----- | 1-13 | |

TECHNICAL FIELDS
SEARCHED      (IPC)

A61L
C02F

The present search report has been drawn up for all claims

| Place of search | Date of completion of the search | Examiner |
|---|---|---|
| The Hague | 3 May 2023 | Châtellier, Xavier |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
...........................................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 19 8630

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 10645940 | B1 | 12-05-2020 | CN | 110692699 A | 17-01-2020 |
| | | | US | 10645940 B1 | 12-05-2020 |
| KR 20150030803 | A | 23-03-2015 | NONE | | |
| KR 20040064411 | A | 19-07-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SONI, A et al.** *Plasma-Activated Water (PAW) as a Disinfection Technology for Bacterial Inactivation with a Focus on Fruit and Vegetables*

- **MAI-PROCHNOW, A et al.** *Interactions of plasma-activated water with biofilms: inactivation, dispersal effects and mechanisms of action.*